# EUROPÄISCHE PATENTSCHRIFT

(11) **EP 1 695 881 B1**
(45) Veröffentlichungstag und Bekanntmachung des Hinweises auf die Patenterteilung: **24.09.2008**
(21) Anmeldenummer: 06101645.7
(22) Anmeldetag: 27.03.2001
(51) Int. Cl.: B60S 1/38

(54) **Wischblatt zum Reinigen von Fahrzeugscheiben**
Wiper blade for cleaning vehicle windows
Balai d'essuie-glace pour essuyer les vitres de véhicules

(30) Priorität: 25.05.2000 DE 10025708
(43) Veröffentlichungstag der Anmeldung: 30.08.2006
(62) Teilanmeldung aus: 01929264.8
(73) Patentinhaber: ROBERT BOSCH GMBH, 70442 Stuttgart (DE)
(72) Erfinder: Dietrich, Jan, 77815, Buehl (DE); Wilms, Christian, 3582, Beringen (BE); Mazurkiewicz, Julius, 3290, Diest (BE); Criel, Paul, 3800, St. Truiden (BE); De Block, Peter, 3545, Halen (BE); Wijnants, Peter, 3111, Wezemaal (BE)

(56) Entgegenhaltungen:
- DE-A1- 19 627 115
- FR-A- 1 348 401
- GB-A- 683 675
- GB-A- 1 222 648
- GB-A- 1 269 993
- US-A- 3 636 583
- US-A- 4 524 481

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des von einem mit dem Wischblatt verbundenen Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397).

Die Erfindung geht aus von einem Wischblatt nach dem Oberbegriff des Anspruchs 1. Bei einem bekannten Wischblatt dieser Art (DE-OS 198 14 609) hat das Tragelement zwei Federschienen, welche in den beiden Längsseiten angeordneten Aufnahmenuten einer gummielastischen Wischleiste liegen. Diese Wischleiste hat eine im Querschnitt im wesentlichen rechteckige Kopfleiste mit den Aufnahmenuten für die Federschienen des Tragelements (Figur 13) und eine leistenförmige Wischlippe welche die Wischarbeit an der Scheibe übernimmt. Die Kopfleiste und die Wischlippe sind durch eine Stegleiste einstückig miteinander verbunden so daß die einander zugewandten Wände der Kopfleiste und der Wischlippe mit Abstand von einander liegen und Abstützungen für die während des Pendel-Wischbetriebs stets in einer sogenannten Schlepplage befmdlichen Wischlippe bilden. In der Praxis hat es sich gezeigt, daß bei bestimmten Voraussetzungen die Strömungsverhältnisse vor der Scheibe den Anpressdruck des Wischblatts an der Scheibe mindern. Eine Verringerung der Wischblatt-Bauhöhe zur Vermeidung dieses Nachteils kann dadurch erreicht werden, daß - wie beim bekannten Wischblatt in Figur 12 dargestellt - das Tragelement als einteilige Federschiene ausgebildet und mit der von der Wischlippe abgewandten Oberseite der Kopfleiste verbunden, beispielsweise verklebt wird. Eine solche Klebeverbindung ist den schwierigen Arbeits- und Umweltbedingungen - Wechselbelastung, Kälte, Hitze, Ozoneinfluß etc. - fiir das Wischblatt nur unzureichend gewachsen.

### Vorteile der Erfindung

Bei dem erfindungsgemäßen Wischblatt werden die beiden Federschienen jeweils in einer der beiden vorhandenen, nutartigen Einschnürungen der Wischleiste angeordnet, so daß spezielle Aufnahmenuten in der Kopfleiste der Wischleiste entfallen können. Dadurch verringert sich die Bauhöhe des Wischblatts ohne daß eine problematische Klebeverbindung zwischen Tragelement und Wischleiste nötig ist. Weil die Breite der Einschnürungsnut in einem Teilbereich breiter ist als die Dicke der Federschienen kann die Wischlippe während des Wischbetriebs stets in die erforderliche Schlepplage kippen.

Dabei ist es besonders vorteilhaft, wenn die seitlichen Begrenzungsflächen der nutartigen Einschnürungen von der Stegleiste zu den Längsseiten der Wischleiste divergieren. Die Federschienen können so bei entsprechender Abstimmung die Wischleiste an der Stegleiste führen und der Wischlippe gleichzeitig deren notwendige Kippbewegung in die Schlepplage ermöglichen.

Eine Fortbildung der Erfindung sieht vor, daß eine der seitlichen Begrenzungsflächen der nutartigen Einschnürung im Querschnitt gesehen einen balligen Verlauf hat. Dadurch wird eine günstige und geräuscharme Abrollbewegung dieser Seitenwand an der ihr zugewandten Bandfläche der betreffenden Federschiene ermöglicht.

Dieser Vorteil kann noch weiter verbessert werden, wenn beide seitliche Begrenzungsflächen der nutartigen Einschnürungen im Querschnitt gesehen einen balligen Verlauf haben.

Zur Unterstützung einer optimalen Anlage der Wischleiste an der zu wischenden, vorzugsweise sphärisch gekrümmten Scheibe weist gemäß einer Ausgestaltung der Erfindung die Wischlippe einen rundum geschlossenen Längskanal auf.

Wenn weiter zwischen dem einander zugewandten Längskanten der Federschienen und den diesen benachbarten Längsseiten der Stegleiste jeweils ein Luftspalt verbleibt, ergibt sich eine spannungsfreie Führung der Wischleiste und damit ein geräuscharmer, effektiver Wischbetrieb.

Damit sich besondere Maßnahmen zur Befestigung einer Anschlußvorrichtung für einen das Wischblatt bewegenden Wischerarms erübrigen, ragt jede der beiden Federschiene wenigstens mit einem mittleren Randstreifen aus ihrer nutartigen Einschnürung, so daß die Anschlußvorrichtung an den freiliegenden Randstreifen befestigt werden kann.

Fertigungstechnische Vorteile können dadurch erreicht werden, daß die beiden Federschienen als separate Bauteile ausgebildet sind.

Das Wischblatt ist auf besonders einfache Weise mit dem Tragelement zusammenzufügen, wenn die beiden Federschienen durch zumindest zwei an ihren Endabschnitten angeordneten Querstegen miteinander verbunden sind und jeder Quersteg einen Mittelabschnitt hat, der sich mit Abstand von der oberen Bandfläche der Federschienen erstreckt, so dass sich brückenartige Querstege ergeben, wobei der Abstand zwischen den beiden Längs-Federschienen kleiner ist als die Brückenweite.

Wenn die Querstege als separate Bauelemente ausgebildet und mit dem Federschienen fest verbunden sind, ergeben sich Vorteile bei der Wischblattfertigung.

Für die Verbindung zwischen den Federschienen und den Querstegen ist es zweckmäßig, wenn die Querstege an den oberen Bandflächen der beiden Federschienen befestigt sind.

Damit sich das Wischblatt beziehungsweise dessen Wischleiste während des Wischbetriebs störungsfrei der jeweiligen Scheibenkrümmung anpassen kann hat es sich als vorteilhaft erwiesen, wenn die Länge der Federschienen größer ist als die Länge der Wischleiste, weil dann durch entsprechende Ausgestaltungen eine gewisse, vorteilhafte Längsbeweglichkeit der Wischleiste gegenüber dem Tragelement sichergestellt werden kann.

Ein stabiles verwindungsarmes Tragelement wird erreicht, wenn wenigstens an jedem Endabschnitt der beiden zueinander gehörenden Federschienen ein Quersteg angeordnet ist. Je nach Länge des Wischblatt ist es jedoch durchaus denkbar die beiden Federschienen mittels weiteren brückenartigen Querstegen miteinander zu verbinden. Bei kurzen Wischblättern hat es sich gezeigt, dass die Anordnung eines einzigen Querstegs an jedem Endabschnitt des Tragelements zur Erlangung eines stabilen, verwindungsfreien Wischblatts ausreichend ist.

Eine weitere Stabilisierung des Tragelements wird erreicht, wenn ein im Mittelbereich der beiden zu einander gehörenden Federschienen angeordneter Quersteg als Teil einer Anschlußvorrichtung zum Verbinden des Wischblatts mit dem Wischerarm ausgebildet ist.

In Weiterbildung der Erfindung weist wenigstens einer der beiden an einem der Endabschnitte der Federschienen angeordneten Querstege einen mit dessen Mittelabschnitt verbundenen, die ihm benachbarte Stirnseite der Wischleiste teilweise überdeckenden Anschlag auf. Dadurch wird ein Herauswandern der Wischleiste aus dem Tragelement in Längsrichtung des Wischblatts verhindert. Bei der Anordnung von je einem mit je einem Anschlag versehenen Querstegen an den beiden Tragelement-Enden ist im Hinblick auf eine gute Anpassung der Wischleiste an die jeweilige Scheibenkrümmung der Abstand zwischen den beiden Anschlägen größer als die Länge der Wischleiste.

GB-A-1269993 offenbart den Oberbegriff des Anspruchs 1.

Um das Verletzungsrisiko beim Umgang mit dem Scheibenwischer zu senken ist erfindungsgemäß jeder an dem Endabschnitten der beiden Federschienen angeordnete Quersteg mit einer vorzugsweise aus Kunststoff gefertigten Abdeckkappe versehen.

Weitere Vorteile während des Wischbetriebs des erfindungsgemäßen Scheibenwischers ergeben sich dadurch, daß die Dicke einer zwischen den beiden Längsnuten in der Wischleiste vorhandenen Wand oder Stegleiste kleiner ist als der Abstand zwischen dem einander benachbarten Längskanten der beiden zueinander gehörenden Federschienen. In Verbindung mit dem Längsspiels der Wischleiste im Tragelement ergibt sich somit eine "freischwimmende" spannungsfreie Wischleiste die sich ohne Beeinträchtigung durch eine Klemmhalterung während des Wischbetriebs dem Scheibenprofil kontinuierlich anpassen kann.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

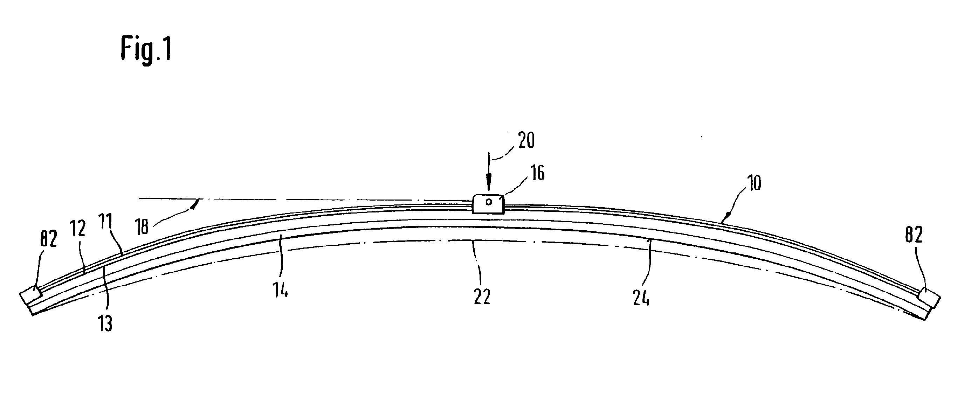

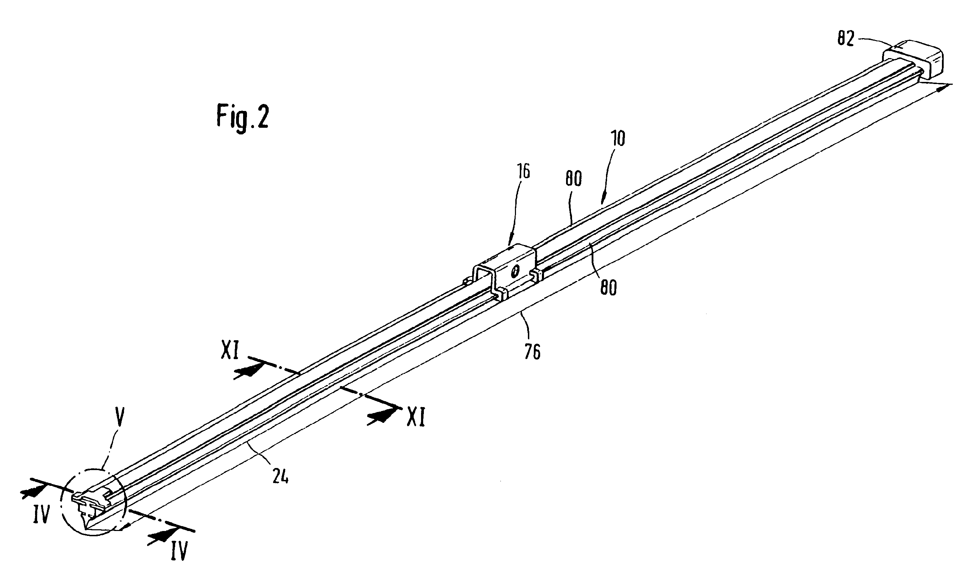

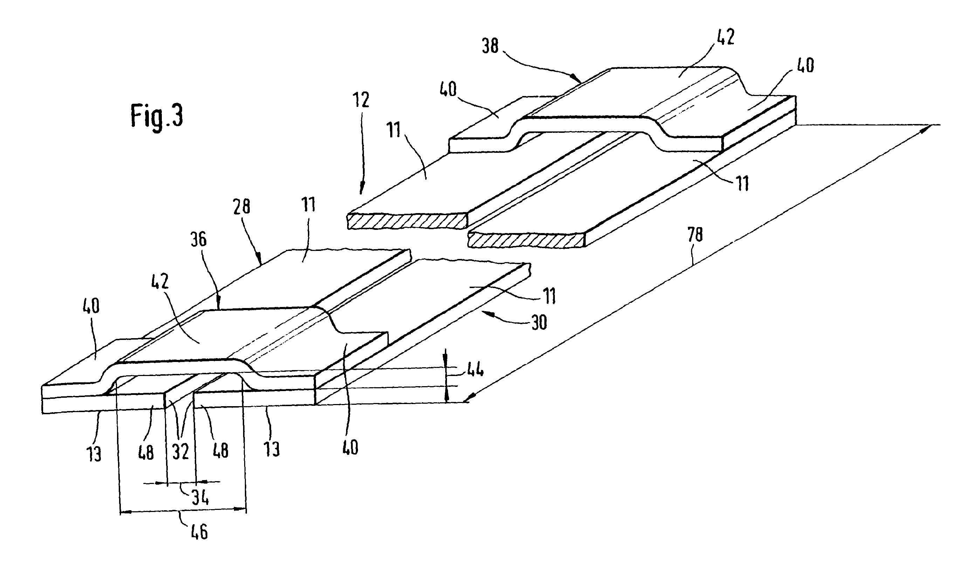

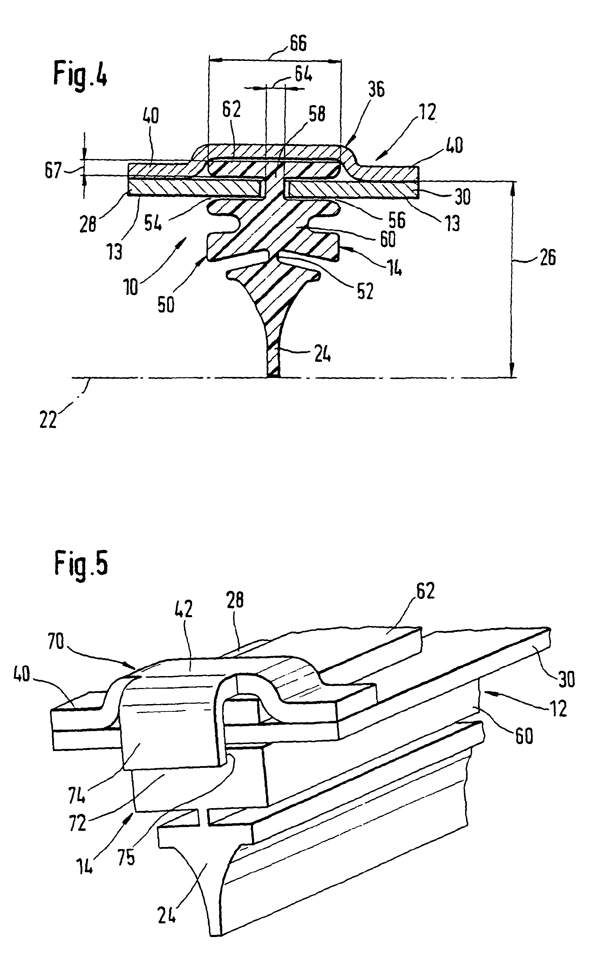

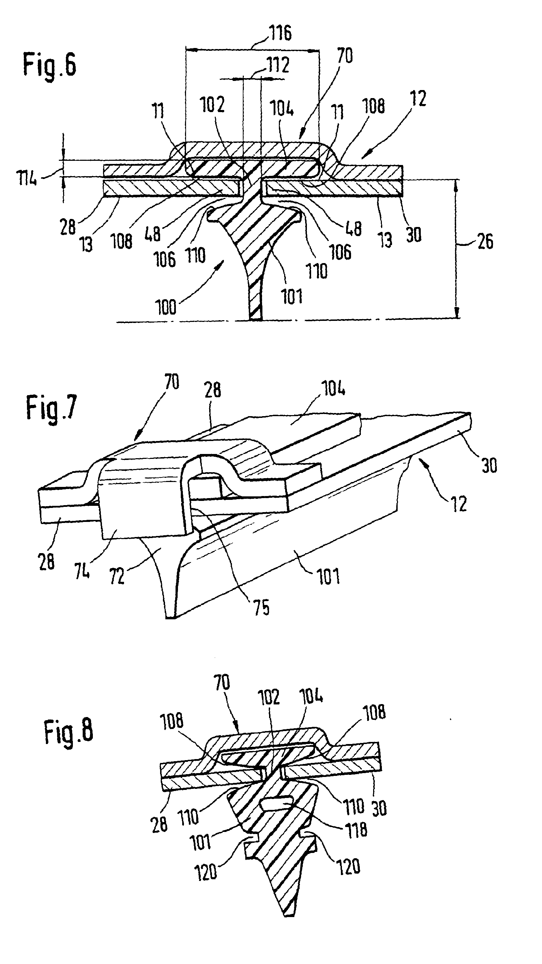

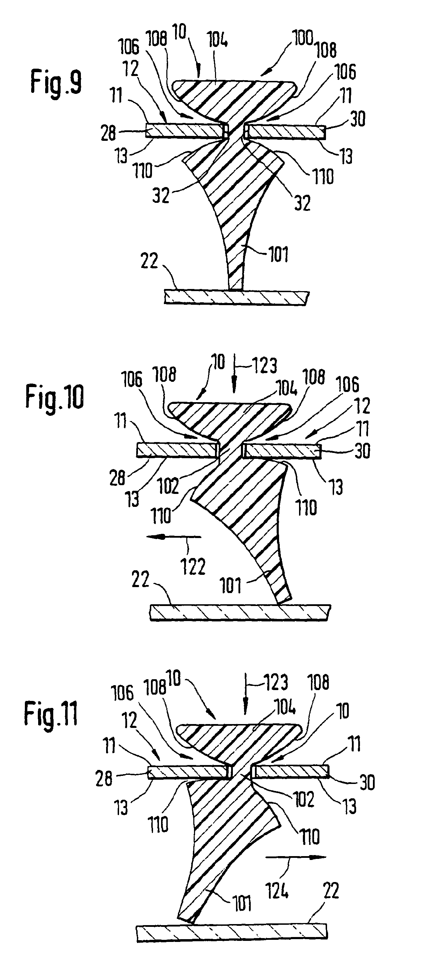

In der Zeichnung zeigen Figur 1 Figur 1 eine Seitenansicht eines erfmdungsgemäßen Wischblatts, Figur 2 eine gestreckte Darstellung des Wischblatts gemäß Figur 1 unmaßstäblich in perspektivischer Darstellung gezeichnet, Figur 3 ein zum erfindungsgemäßen Wischblatt gehörendes, verkürzt dargestelltes Tragelement in vergrößerter, gestreckter, perspektivischer Darstellung, Figur 4 die Schnittfläche eines Schnitt entlang der Linie IV-IV in Figur 2 in vergrößerter Darstellung, Figur 5 eine in Figur 2 mit V bezeichnete Einzelheit in vergrößerter Darstellung, Figur 6 die Schnittfläche eines Schnitts gemäß Figur 4 durch eine andere Ausführungsform des erfindungsgemäßen Wischblatts, Figur 7 eine Fig. 5 entsprechende Einzelheit des Wischblatts gemäß Figur 6, Figur 8 die Schnittfläche eines Schnitts gemäß den Figuren 4 und 6 durch eine weitere Ausführungsform des erfindungsgemäßen Wischblatts, Figur 9 eine Prinzipdarstellung der Schnittfläche eines Schnitts entlang der Linie IX-IX in Fig. 2 durch ein erfindungsgemäßes Wischblatt in vergrößerter Darstellung wobei dieses auf die zu wischende Scheibenoberfläche aufgesetzt ist, Figur 10 das Wischblatt gemäß Figur 9 während des Wischbetriebs in der einen Wischrichtung und Figur 11 das Wischblatt gemäß Figur 9 während des Wischbetriebs in der anderen Wischrichtung.

### Beschreibung der Ausführungsbeispiele

Ein in den Figuren 1 und 2 gezeigtes Wischblatt 10 weist ein bandartig langgestrecktes, federelastisches Tragelement 12 auf, an dessen Unterseite 13 eine langgestreckte, gummielastische Wischleiste 14 längsachsenparallel angeordnet ist. An der Oberseite 11 des auch als Federbalken zu bezeichnenden Tragelements 14 ist in dessen Mittelabschnitt das wischblattseitige Teil 16 einer Anschlußvorrichtung angeordnet, mit deren Hilfe das Wischblatt 10 gelenkig mit einem in Figur 1 strichpunktiert angedeuteten, angetriebenen Wischerarm 18 lösbar verbunden werden kann. Dazu ist der Wischerarm 18 an seinem freien Ende mit dem wischerarmseitigen Teil der Anschlußvorrichtung versehen. Der Wischerarm 18 ist in Richtung des Pfeiles 20 zur zu wischenden Scheibe - beispielsweise zur Windschutzscheibe eines Kraftfahrzeugs - belastet, deren zu wischenden Oberfläche in Figur 1 durch eine strichpunktierte Linie 22 angedeutet ist. Da die Linie 22 die stärkste Krümmung der Scheibenoberfläche darstellen soll ist klar ersichtlich, daß die Krümmung des mit seinen beiden Enden an der Scheibe anliegenden, noch unbelasteten Wischblatt 10 stärker ist als die maximale Scheibenkrümmung (Figur 1). Unter dem Anpressdruck (Pfeil 20) legt sich das Wischblatt 10 seiner Wischlippe 24 über seine gesamte Länge an der Scheibenoberfläche 22 an. Dabei baut sich im beispielsweise aus Metall gefertigten, federelastischen Tragelement 12 eine Spannung auf, welche für eine ordnungsgemäße Anlage der Wischleiste 14 beziehungsweise der Wischlippe 24 über deren gesamte Länge an der Scheibe sowie für eine gleichmäßige Verteilung des Anpressdrucks sorgt.

Im Folgenden soll eine erste Ausführungsform des Wischblatts anhand der Figur 3 bis 5 näher erläutert werden. Aus Figur 4 ist ersichtlich, daß das Tragelement 12 des Wischblatts 10 mit einem Abstand 26 vor der zu wischenden Scheibe 22 liegt. Dabei ist dessen Anordnung so getroffen, daß seine Bandflächen 11 beziehungsweise 13 sich in einer Ebene befinden, welche sich im wesentlichen parallel zur zu wischenden Scheibenoberfläche 22 erstreckt. Der besonders vorteilhafte Aufbau des Tragelements 12 ist insbesondere aus den Figuren 3 und 4 ersichtlich. Es hat zwei in einer gemeinsamen Ebene liegende bandartige Federschienen 28 und 30, die parallel zu einander ausgerichtet sind. Die einander zugewandten inneren Längskanten 32 befinden sich dabei in einem Abstand 34 voneinander. An jedem der beiden Enden der Federschienen 28, 30 sind diese durch einen brückenartigen Quersteg 36 beziehungsweise 38 miteinander verbunden; beispielsweise miteinander verschweißt. Dabei liegt jeder brückenartige Quersteg mit seinen Endabschnitten 40 an der Oberseite 11 des Tragelements 12 beziehungsweise an dessen Federschienen 28, 30 an. Jeder der beiden Querstege 36 beziehungsweise 28 hat einen Mittelabschnitt 42 der sich mit einem Abstand 44 von der oberen Bandfläche 11 der Federschienen befmdet und der damit deren brückenartigen Gestalt begründet. Da die Längserstreckung 46 der Mittelabschnitte 42 größer ist als der Abstand 34 zwischen den einander zugewandten inneren Längskanten 32, erstrecken sich die beiden Federschienen 28 und 30 mit inneren Randstreifen 48 in den Bereich der Mittelabschnitte 42, wobei die Randstreifen 48 mit einem Abstand 44 unterhalb von den Mittelabschnitten 42 angeordnet sind. Neben den schon erwähnten Aufgaben des Tragelements 12 hinsichtlich der Auflagekraftverteilung soll dieses auch eine vorschriftsmäßige, spannungsfreie Führung der Wischleiste 14 während des Wischbetriebs gewährleisten. Damit ist auch ein geräuscharmer Wischbetrieb sichergestellt.

Die Wischleiste 14 dieser ersten Ausführungsform hat einen Querschnitt, der anhand der Figur 4 deutlich gemacht werden soll. Sie hat eine Kopfleiste 50, mit der die, die eigentliche Wischarbeit übernehmende Wischlippe 24 über eine schmale Stegleiste 52 verbunden ist. Die Anordnung der Stegleiste 52 ermöglicht ein Kippen der Wischlippe 24 in eine die Wischarbeit fördernde Schlepplage, die später erläutert werden soll. Die Kopfleiste 50 ist an ihren einander gegenüberliegenden Längsseiten mit zu diesen Längsseiten randoffenen Längsnuten 54 und 56 versehen. Die Längsnuten 54 und 56 dienen zur Aufnahme der inneren Randstreifen 48 der Federschienen 28 und 30. Die Tiefe der Längsnuten 54 und 56 ist so gewählt, daß zwischen den beiden Längsnuten eine Wand 58 verbleibt. Die Kopfleiste 50 hat somit eine Grundleiste 60 und eine Deckleiste 62, die beide durch die Wand 58 miteinander verbunden sind. Die Dicke 64 der Wand 58 ist kleiner als der Abstand 34 zwischen den inneren Längskanten 32 der Federschienen 28, 30 beziehungsweise kleiner als der Abstand zwischen deren inneren Randstreifen 48. Die Breite der beiden Längsnuten 54 und 56 in der Kopfleiste 50 ist so auf die Dicke der Federschienen 28, 30 beziehungsweise deren inneren Randstreifen 48 abgestimmt, daß eine spannungsfreie Halterung der Wischleiste am Tragelement 12 gewährleistet ist, wenn die Wischleiste gemäß Figur 4 mit dem Tragelement 12 gemäß Figur 3 zusammengebaut ist. Da auch die Breite 66 der Deckleiste 62 etwas kleiner ist als die auch als Brückenweite zu bezeichnende Längserstreckung 46 des Mittelabschnitts 42 und deren Dicke 67 geringer ist als der Abstand 44 zwischen dem Mittelabschnitt 42 und den Oberseiten 11 der Federschienen 28, 30 kann die über ihre gesamte Längserstreckung einen gleichbleibenden Querschnitt aufweisende Wischleiste 14 ohne Schwierigkeiten in Längsrichtung in das Tragelement 12 eingeschoben und so mit diesem verbunden werden.

Eine weitere Besonderheit des erfindungsgemäßen Wischblatts ist in Figur 5 dargestellt. Dort wird gezeigt, daß der an einem Ende des Tragelements angeordnete Quersteg 70 an seiner dem Wischblattende zugewandten Seite in seinem Mittelabschnitt mit einem mit ihm verbundenen, die ihm benachbarte Stirnseite 72 zumindest teilweise überdeckenden Anschlag 74 versehen ist. Dabei ist der Anschlag 74 durch einen abgekröpften, lappenartigen Fortsatz des Mittelabschnitts 42 gebildet. Wenn jedes der beiden Wischblattenden beziehungsweise jedes der beiden Tragelementenden mit einem Quersteg 70 gemäß Figur 5 versehen ist, ist darauf zu achten, daß der Abstand zwischen den einander zugewandten Innenwänden 75 der Anschlaglappen 74 etwas größer ist die Länge 76 der Wischleiste 14 (Figur 2). Dies kann beispielsweise auch dadurch erreicht werden, daß die Länge 78 des Tragelements 12 geringfügig größer ist als die Länge 76 der Wischleiste 14. Die beidseitige Anordnung der Anschläge 74 bildet somit eine wirksame Sicherung gegen Herauswandern der Wischleiste 14 in Längsrichtung aus seinem Tragelement 12 während des Wischbetriebs. Selbstverständlich wird in einem solchen Fall die Abkröpfung zumindest eines der beiden Anschlaglappen 74 erst nach dem Einführung der Wischleiste 14 in das Tragelement 12 vorgenommen.

Das im Mittelabschnitt des Wischblatts 10 angeordnete Teil 16 der Anschlußvorrichtung für den Wischerarm umgreift die jeweiligen äußeren, aus den Längsnuten 54 und 56 ragenden äußeren Randstreifen 80 der Federschienen 28, 30 beziehungsweise des Tragelements 12. Die Verbindung zwischen dem Teil 16 und dem Tragelement 12 kann form- und/oder kraftschlüssig sein. Bei einer entsprechenden Länge des Wischblatts kann es auch zweckmäßig sein, wenn zwischen den beiden endseitig angeordnete Querstegen 36 und 38 weitere, entsprechende Querstege angeordnet sind. Zur Vermeidung von Verletzungen beim Umgang mit dem Wischblatt insbesondere durch den Endverbraucher ist an den beiden Federschienen 28, 30 beziehungsweise den endseitigen Querstegen 36, 38 eine vorzugsweise aus Kunststoff gefertigte Abdeckkappe 82 angeordnet, vorzugsweise aufgerastet (Figuren 1 und 2).

Weitere Ausführungsformen des erfindungsgemäßen Wischblatts sind in den Figuren 6 bis 8 dargestellt.

Die Tragelemente dieser Ausführungsformen entsprechen vollständig den schon erläuterten Tragelementen 12 aus den Figuren 3 bis 5, so daß die in diesen Figuren dafür verwendeten Bezugszahlen direkt übernommen werden können. Die Ausgestaltung der Wischleiste 100 bei dieser Ausführungsform unterscheidet sich jedoch grundsätzlich vom Aufbau der Wischleiste 14 bei der schon beschriebenen Ausführungsform. Wie insbesondere Figur 6 zeigt, hat die Wischleiste 100 lediglich eine Wischlippe 101, die über eine Stegleiste 102 mit einer Deckleiste 104 einstückig verbunden ist. Die beim schon beschriebenen Ausführungsbeispiel gemäß den Figuren 4 und 5 vorhandene Grundleiste 60 entfällt somit. Die inneren Randstreifen 48 der Federschienen 28 und 30 liegen in nutartigen Einschnürungen 106 der Wischleiste 100, welche zur Bildung der schmalen Stegleiste 102 notwendig sind. Somit ist die an der Deckleiste 104 ausgebildete seitliche Begrenzungsfläche 108 der Einschnürung 106 der oberen Bandfläche 11 des Tragelements 12 zugekehrt. Die andere seitliche Begrenzungsfläche 110 der nutartigen Einschnürung 106 liegt somit direkt der unteren Bandfläche 13 des Tragelements 12 gegenüber. Es ist somit ersichtlich, daß jede der beiden inneren Längskanten 32 der beiden Federschienen 28, 30 beziehungsweise des Tragelements 12 in einer der beiden nutartigen Einschnürungen 106 der Wischleiste 100 angeordnet ist. Weiter ist insbesondere aus Figur 6 ersichtlich, daß die beiden seitlichen Begrenzungsflächen 110 der Einschnürungen 106 ballig ausgebildet und so angeordnet sind, daß das Breitenmaß der nutartigen Einschnürungen 106 zumindest über einen äußeren Teilbereich breiter ist als die Dicke der Federschienen 28, 30. Dadurch ist es möglich, daß die Wischlippe 101 während des Wischbetriebs in die angestrebte, vorteilhafte Schlepplage kippen kann. Auch bei dieser Ausführungsform des erfindungsgemäßen Wischblatts ist die Breite 112 der Stegleiste 102 derartig auf den Abstand 34 zwischen den einander zugewandten inneren Längskanten 32 der Federschienen 28, 30 abgestimmt, daß zwischen der Stegleiste und den Federschienen ein Luftspalt verbleibt. Weiter ist auch hier die Dicke 114 der Deckleiste 104 etwas geringer als der Abstand 44 zwischen dem Mittelabschnitt 42 des Querstegs 36 und dem inneren Randstreifen 48. Auch die Breite 116 der Deckleiste 104 ist etwas geringer als die Längserstreckung 46 des Mittelabschnitts 42 der brückenartige Querstege 36. Dadurch ist es möglich die über ihre gesamte Länge einen gleichbleibenden Querschnitt aufweisende Wischleiste 100 ohne Hemmnisse in ihrer Längserstreckung in das Tragelement 112 einzuführen so daß die in Figur 6 dargestellte Montagestellung erlangt wird. Auch bei dieser Ausführungsform liegt die Ebene, in welche sich das Tragelement 12 erstreckt mit Abstand 26 von der Oberfläche 22 der zu wischenden Scheibe 22.

Wie anhand der Figur 5 schon beschrieben kann auch bei dieser Ausführungsform des erfindungsgemäßen Wischblatts jeder der beiden brückenartigen Querstege 70 an seinen in Längserstreckung des Wischblatts gesehen äußeren Enden mit einem abgekröpften Anschlag 74 versehen sein, so daß nach dem Einführen der Wischleiste 14 in das Tragelement 12 und dem Abkröpfen der Anschlagklappen 74 eine zuverlässige Längssicherung der Wischleiste 100 im Tragelement 12 sichergestellt ist. Es ist klar, daß auch bei dieser Ausführungsform der Abstand zwischen den einander zugewandten Innenwände 75 der Anschlaglappen 74 etwas größer sein muß als die Länge 76 der Wischleiste.

Eine weitere Ausführungsform des erfindungsgemäßen Wischblatt soll anhand der Figur 8 erläutert werden. Die Ausführungsform gemäß Figur 8 entspricht in ihrem grundsätzlichen Aufbau dem Aufbau der anhand der Figur 6 beschriebenen Ausführungsform. Abweichend von der Ausführungsform gemäß Figur 6 sind jedoch bei dieser Ausführungsform nicht nur die seitliche Begrenzungsflächen 110 sondern auch die anderen, an der Deckleiste 104 ausgebildeten seitlichen Begrenzungsflächen 108 der nutartigen Einschnürungen 106 ballig ausgebildet. Weiter unterscheidet sich die Ausführungsform gemäß Figur 8 von der Ausführungsform gemäß Figur 6 noch durch einen in der Wischlippe 101 angeordneten, durchgehenden, rundum geschlossenen Längskanal 118. Die Anordnung des Längskanals 118 in der Wischlippe kann für sich alleine oder in Verbindung mit weiteren Längsnuten für ein weiches, geräuscharmes Umlegeverhalten der Wischlippe während des Wischbetriebs sorgen. Auch ist dessen Anordnung nicht zwangsläufig in Verbindung mit der balligen Ausbildung der Begrenzungsflächen 108, 110 erforderlich.

Wie aus den Figuren 2 und 3 ersichtlich ist, ist die Breite des Tragelements 12 über die gesamte Längserstreckung gleich. Es ist jedoch auch denkbar, daß sich das Tragelement zu den Endabschnitten des Wischblatts hin verjüngt. Damit das Teil 16 an dem Wischblatt befestigt werden kann genügt es, wenn jede Federschiene 28, 30 wenigstens mit einem mittleren, äußeren Randstreifen 80 aus ihrer nutartigen Einschnürung ragt, so daß an diesem Randstreifen 80 das Teil 16 der Anschlußvorrichtung befestigt werden kann. Weiter ist denkbar, daß anstelle eines Tragelements 12 gemäß Figur 3 die beiden Federschienen als separate Bauteile ausgebildet und in den nutartigen Einschnürungen der Wischleiste angeordnet sein können. Die Sicherstellung insbesondere des Abstandmaßes 34 kann dann durch weitere, nicht dargestellte Bauelemente übernommen werden.

Die Figuren 9 bis 11 zeigen Prinzip-Schnittflächendarstellungen des Wischblatts gemäß den Figuren 6 und 7, geschnitten entlang der Linie IX-IX in Fig. 2 , wobei in Fig. 9 das Wischblatt 10 mit seiner Wischlippe 101 lediglich auf die zu wischende Scheibenoberfläche 22 aufgesetzt ist. Die Wischleiste 100 ist mit Spiel zwischen den inneren Längskanten 32 der beiden Federschienen 28, 30 gehalten (vgl. auch Figuren 3 und 4). Da die Länge 76 der Wischleiste 100 auch etwas geringer ist als die Länge 78 des Tragelements 12 bzw. geringer ist als das Maß zwischen den einander zugewandten Innenwänden 75 der Anschläge 7 an den beiden Enden des Tragelements 12 ergibt sich eine sogenannte "freischwimmende", spannungsfreie aber betriebssichere Halterung der Wischleiste 100 im Tragelement 12.

Wenn nun während des Wischbetriebs das Wischblatt 10 unter Belastung durch den Anpreßdruck (Pfeil 20 in Fig. 1) in Richtung des Pfeils 122 in Fig. 10 über die Scheibe 22 bewegt wird, kippt die Wischlippe 101 im Bereich der Stegleiste 102 in eine vorteilhafte Schlepplage, wobei sich das Tragelement 12 der Scheibe etwas annähert (Pfeil 123). Die Kippbewegung wird dadurch begrenzt, dass sich die eine, seitliche Begrenzungsfläche 110 der einen nutartigen Einschnürung 106 an der Unterseite 13 der einen Federschiene 30 abstützt. Wenn das Wischblatt 10 seine Umkehrposition erreicht hat und durch den Wischerarm 18 in Gegenrichtung (Pfeil 124 in Fig. 11) bewegt wird, kippt die Wischlippe 101 über eine aus Fig. 9 ersichtliche Zwischenposition in seine andere Schlepplage (Fig. 11) wobei sich die Wischlippe 101 mit der seitlichen Begrenzungsfläche 110 der anderen nutartigen Einschnürung 106 an der Unterseite 13 der anderen Federschiene 28 abstützt.

Wenn sich die Schlepplagen der Wischlippe 101 nahe ihren Umkehrlagen - wegen der üblicherweise sphärischen Krümmung der Windschutzscheibe 22 - der Scheibe annähert, rollen die ballig ausgebildeten Begrenzungsflächen 110 geräuschlos an den Unterseiten 13 der Federschiene 28, 30 ab. Entsprechend können - wenn nötig - auch die anderen balligen Begrenzungsflächen 108 der nutartigen Einschnürungen 106 an den Oberseiten 11 der Federschienen 28 bzw. 30 abrollen.

## Patentansprüche

1. Wischblatt (10) für Scheiben vorzugsweise von Kraftfahrzeugen mit einer an der Scheibe (22) anlegbaren, langgestreckten, gummielastischen Wischleiste (14), die mit einem langgestreckten, federelastischen, eine Anschlußvorrichtung (16) für einen Wischerarm (18) aufweisenden Tragelement (12) längsachsenparallel verbunden ist, welches zwei zueinander parallel und in einer mit Abstand (26) vor der Scheibe (22) liegenden Ebene angeordnete bandartige Federschienen (28,30) hat, deren einen, inneren Längskanten (32) einander benachbart mit Abstand (34) voneinander liegen und die über ihre Längserstreckung einen gleichbleibenden Querschnitt aufweisende Wischleiste eine an der Scheibe anlegbare leistenartige Wischlippe (101) hat, welche über eine, durch einander gegenüberliegend angeordnete nutartige Einschnürungen (106) gebildete schmale Stegleiste (102) mit einer an dem Tragelement (12) gehaltenen Deckleiste (104) verbunden ist und die Federschienen die Wischleiste halten, wobei jede der beiden inneren Längskanten (32) der Federschienen (28,30) in einer der beiden nutartigen Einschnürungen (106) der Wischleiste (100) angeordnet ist, wobei die Breite der Längsnuten (54, 56) in der Kopfleiste (50) so auf die Dicke der Federschienen (28,30) beziehungsweise deren inneren Randstreifen (48) abgestimmt ist, dass eine spannungsfreie Halterung der Wischleiste am Tragelement (12) gewährleistet ist, daß ferner die beiden Federschienen (28, 30) durch zumindest zwei an ihren Endabschnitten angeordneten Querstege (36, 38) miteinander verbunden sind, daß jeder Quersteg einen Mittelabschnitt (42) hat, der sich mit Abstand (44) von der oberen Bandfläche (11) der Federschienen erstreckt, so daß sich brückenartige Querstege ergeben, wobei der Abstand (34) zwischen den beiden Längs-Federschienen (28, 30) kleiner ist als die Brückenweite (46), **dadurch gekennzeichnet, daß** jeder an den Endabschnitten der beiden Federschienen (28, 30) angeordnete Quersteg (36, 38) mit einer vorzugsweise aus Kunststoff gefertigten Abdeckkappe (82) versehen ist.

2. Wischblatt nach Anspruch 1, **dadurch gekennzeichnet, daß** nutartige Einschnürungen (106) vorgesehen sind, in denen die Federschienen (28 ,30) liegen, und seitliche Begrenzungsfläche (108, 110) der nutartigen Einschnürungen (106) von der Stegleiste (102) zu den Längsseiten der Wischleiste (100) divergieren.

3. Wischblatt nach Anspruch 2, **dadurch gekennzeichnet, daß** eine seitliche Begrenzungsfläche (110) der nutartigen Einschnürungen (106) im Querschnitt gesehen einen balligen Verlauf hat.

4. Wischblatt nach Anspruch 2, **dadurch gekennzeichnet, daß** beide seitlichen Begrenzungsflächen (108, 110) der nutartigen Einschnürungen (106) im Querschnitt gesehen einen balligen Verlauf haben.

5. Wischblatt nach einem der Ansprüche 1 bis 4, **dadurch gekennzeichnet, daß** die Wischlippe (101) mit einem rundum geschlossenen Längskanal (118) versehen ist.

6. Wischblatt nach einem der Ansprüche 1 bis 5, **dadurch gekennzeichnet, daß** zwischen den einander zugewandten Längskanten (32) der Federschienen (28, 30) und den diesen benachbarten Längsseiten der Stegleiste (102) jeweils ein Luftspalt verbleibt.

7. Wischblatt nach einem der Ansprüche 1 bis 6, **dadurch gekennzeichnet, daß** jede Federschiene (28, 30) wenigstens mit einem mittleren Randstreifen aus ihrer nutartigen Einschnürung (106) ragt.

8. Wischblatt nach einem der Ansprüche 1 bis 7, **dadurch gekennzeichnet, daß** die beiden Federschienen (28, 30) als separate Bauteil ausgebildet sind.

9. Wischblatt nach Anspruch 8, **dadurch gekennzeichnet, daß** die Querstege (36, 38) als separate Bauelemente ausgebildet und mit den beiden Federschienen (28, 30) fest verbunden sind.

10. Wischblatt nach einem der Ansprüche 1 bis 9, **dadurch gekennzeichnet, daß** die Querstege (36, 38) an den oberen Bandflächen (11) der beiden Federschienen (28, 30) befestigt sind.

11. Wischblatt nach einem der Ansprüche 1 bis 10, **dadurch gekennzeichnet, daß** die Länge der Federschienen (28, 30) größer ist als die Länge der Wischleiste (14 beziehungsweise 100).

12. Wischblatt nach einem der Ansprüche 1 bis 11, **dadurch gekennzeichnet, daß** wenigstens an jedem Endabschnitt der beiden zueinander gehörenden Federschienen (28, 30) ein Quersteg (36, 38) angeordnet ist.

13. Wischblatt nach einem der Ansprüche 1 bis 12, **dadurch gekennzeichnet, daß** ein im Mittelbereich der beiden zueinander gehörenden Federschienen (28, 30) angeordneter Quersteg als Teil (16) einer als Anschlußvorrichtung (16) zum Verbinden des Wischblatts (10) mit dem Wischerarm (18) ausgebildet ist.

14. Wischblatt nach einem der Ansprüche 12 oder 13, **dadurch gekennzeichnet, daß** wenigstens einer der beiden an einem Endabschnitt der Federschienen (28, 30) angeordneten Querstege (36, 38) einen mit dessen Mittelabschnitt verbundenen die ihm benachbarte Stirnseite der Wischleiste (14 beziehungsweise 100) teilweise überdeckenden Anschlag (74) aufweist.

15. Wischblatt nach einem der Ansprüche 1 bis 8, **dadurch gekennzeichnet, daß** die Dicke (46 beziehungsweise 112) einer zwischen den beiden Längsnuten (54, 56 beziehungsweise 106) in der Wischleiste (14 beziehungsweise 100) vorhandenen Stegleiste (52 beziehungsweise 102) kleiner ist als der Abstand (34) zwischen den einander benachbarten Längskanten (32) der beiden zueinander gehörenden Federschienen (28, 30).

## Claims

1. Wiper blade (10) for windows, preferably of motor vehicles, with an elongate, rubber-elastic wiper strip (14) which can be placed against the window (22) and is connected to, in a manner parallel to the longitudinal axis of, an elongate, spring-elastic supporting element (12) which has a connection device (16) for a wiper arm (18) and has two mutually parallel, band-like spring rails (28, 30) which are arranged in a plane located at a distance (26) in front of the window (22) and the inner longitudinal edges (32) of which are located adjacent to each other at a distance (34) from each other, and the wiper strip, which has a uniform cross section over its longitudinal extent, has a strip-like wiper lip (101) which can be placed against the window and is connected via a narrow web strip (102), which is formed by groove-like constrictions (106) arranged opposite each other, to a cover strip (104) held on the supporting element (12), and the spring rails hold the wiper strip, wherein each of the two inner longitudinal edges (32) of the spring rails (28, 30) is arranged in one of the two groove-like constrictions (106) of the wiper strip (100), wherein the width of the longitudinal grooves (54, 56) in the top strip (50) is matched to the thickness of the spring rails (28, 30) or of the inner edge strips (48) thereof in such a manner that stress-free securing of the wiper strip on the supporting element (12) is ensured, wherein, furthermore, the two spring rails (28, 30) are connected to each other by at least two transverse webs (36, 38) arranged on their end sections, wherein each transverse web has a central section (42) which extends at a distance (44) from the upper band surface (11) of the spring rails, thus resulting in bridge-like transverse webs, and wherein the distance (34) between the two longitudinal spring rails (28, 30) is smaller than the bridge width (46), **characterized in that** each transverse web (36, 38) which is arranged on the end sections of the two spring rails (28, 30) is provided with a covering cap (82) preferably manufactured from plastic.

2. Wiper blade according to Claim 1, **characterized in that** groove-like constrictions (106) in which the spring rails (28, 30) lie are provided, and lateral boundary surfaces (108, 110) of the groove-like constrictions (106) diverge from the web strip (102) to the longitudinal sides of the wiper strip (100).

3. Wiper blade according to Claim 2, **characterized in that** a lateral boundary surface (110) of the groove-like constrictions (106) has a spherical profile, as seen in cross section.

4. Wiper blade according to Claim 2, **characterized in that** the two lateral boundary surfaces (108, 110) of the groove-like constrictions (106) have a spherical profile, as seen in cross section.

5. Wiper blade according to one of Claims 1 to 4, **characterized in that** the wiper lip (101) is provided with a longitudinal channel (118) which is closed all the way around.

6. Wiper blade according to one of Claims 1 to 5, **characterized in that** a respective air gap remains between the mutually facing longitudinal edges (32) of the spring rails (28, 30) and those longitudinal sides of the web strip (102) which are adjacent to them.

7. Wiper blade according to one of Claims 1 to 6, **characterized in that** each spring rail (28, 30) protrudes at least with a central edge strip out of its groove-like constriction (106).

8. Wiper blade according to one of Claims 1 to 7, **characterized in that** the two spring rails (28, 30) are designed as a separate component.

9. Wiper blade according to Claim 8, **characterized in that** the transverse webs (36, 38) are designed as separate structural elements and are connected fixedly to the two spring rails (28, 30).

10. Wiper blade according to one of Claims 1 to 9, **characterized in that** the transverse webs (36, 38) are fastened to the upper band surfaces (11) of the two spring rails (28, 30).

11. Wiper blade according to one of Claims 1 to 10, **characterized in that** the length of the spring rails (28, 30) is greater than the length of the wiper strip (14 or 100).

12. Wiper blade according to one of Claims 1 to 11, **characterized in that** a transverse web (36, 38) is arranged at least on each end section of the two mutually associated spring rails (28, 30).

13. Wiper blade according to one of Claims 1 to 12, **characterized in that** a transverse web arranged in the central region of the two mutually associated spring rails (28, 30) is designed as part (16) of a connection device (16) for connecting the wiper blade (10) to the wiper arm (18).

14. Wiper blade according to either of Claims 12 and 13, **characterized in that** at least one of the two transverse webs (36, 38) arranged on an end section of the spring rails (28, 30) has a stop (74) which is connected to the central section thereof and partially covers that end side of the wiper strip (14 or 100) which is adjacent to it.

15. Wiper blade according to one of Claims 1 to 8, **characterized in that** the thickness (46 or 112) of a web strip (52 or 102) present between the two longitudinal grooves (54, 56 or 106) in the wiper strip (14 or 100) is smaller than the distance (34) between the mutually adjacent longitudinal edges (32) of the two mutually associated spring rails (28, 30).

## Revendications

1. Balai d'essuie-glace (10) pour des vitres, de préférence de véhicules automobiles comportant une lame d'essuyage (14) élastique comme du caoutchouc, allongée, destinée à être appliquée contre la vitre (22) et reliée à un élément de support (12), allongé, élastique à ressort, comportant un dispositif d'accouplement (16) pour être relié parallèlement suivant l'axe longitudinal à un bras d'essuie-glace (18),
cet élément de support ayant deux rails élastiques (28, 30) en forme de rubans, parallèles, situés dans un plan à la distance (26) devant la vitre (22), rails dont les arêtes longitudinales intérieures (32) sont écartées l'une de l'autre d'une distance (34), et
la lame d'essuyage a une section constante suivant son extension longitudinale, et comporte une lèvre d'essuyage (101) en forme de nervure s'appliquant contre la vitre, cette lèvre étant reliée à une barrette de tête (104) tenue sur l'élément de support (12) par l'intermédiaire d'une entretoise de liaison (102), étroite, formée entre deux rétrécissements en forme de rainures (106) qui se font face,
les rails élastiques tenant la lame d'essuyage,
chacune des deux arêtes longitudinales intérieures (32) des rails élastiques (28, 30) se logeant dans l'un des deux rétrécissements en forme de rainures (106) de la lame d'essuyage (100), la largeur des rainures longitudinales (54, 56) dans la barrette de tête (50) étant définie en fonction de l'épaisseur des rails élastiques (28, 30) ou de leurs bandes marginales intérieures (48) de façon a assurer une fixation sans contrainte de la lame d'essuyage à l'élément de support (12), et
en outre, les deux rails élastiques (28, 30) sont reliés par au moins deux traverses (36, 38) prévues au niveau des segments d'extrémité,
chaque traverse a un segment central (42) situé à une distance (44) de la surface de bande supérieure (11) des rails élastiques de façon à obtenir des traverses en forme de ponts,
la distance (34) entre les deux rails élastiques longitudinaux (28, 30) étant inférieure à la largeur de pont (46),
**caractérisé en ce que**
chaque traverse (36, 38) prévues au niveau des segments d'extrémité des deux rails élastiques (28, 30) est munie d'un capuchon (82) réalisé de préférence en matière plastique.

2. Balai d'essuie-glace selon la revendication 1,
**caractérisé en ce que**
les rétrécissements en forme de rainures (106) sont prévus pour recevoir les rails élastiques (28, 30) et les surfaces limites latérales (108, 110) des rétrécissements (106) en forme de rainures des entretoises (102) vont en divergeant vers les grands côtés de la lame d'essuyage (100).

3. Balai d'essuie-glace selon la revendication 2,
**caractérisé en ce qu'**
une surface limite latérale (110) des rétrécissements en forme de rainures (106) a en section une forme bombée.

4. Balai d'essuie-glace selon la revendication 2,
**caractérisé en ce que**
les deux surfaces limites latérales (108, 110) des rétrécissements en forme de rainures (106) ont en section un tracé bombé.

5. Balai d'essuie-glace selon l'une des revendications 1 à 4,
**caractérisé en ce que**
la lèvre d'essuyage (101) est munie d'une canal longitudinal (118) fermé de façon périphérique.

6. Balai d'essuie-glace selon l'une des revendications 1 à 5,
**caractérisé par**
un intervalle d'air respectif entre les deux arêtes longitudinales (32) tournées l'une vers l'autre des rails élastiques (28, 30) et des grands cotés voisins des entretoises (102).

7. Balai d'essuie-glace selon l'une des revendications 1 à 6,
**caractérisé en ce que**
chacun des rails élastiques (28, 30) dépasse par au moins une bande marginale médiane de son rétrécissement en forme de rainure (106).

8. Balai d'essuie-glace selon l'une des revendications 1 à 7,
**caractérisé en ce que**
les deux rails élastiques (28, 30) sont des composants distincts.

9. Balai d'essuie-glace selon la revendication 8,
**caractérisé en ce que**
les traverses (36, 38) sont réalisées sous la forme de composants séparés et sont reliées solidairement aux deux rails élastiques (28, 30).

10. Balai d'essuie-glace selon l'une des revendications 1 à 9,
**caractérisé en ce que**
les traverses (36, 38) sont fixées au niveau des surfaces de bande supérieures (11) des deux rails élastiques (28, 30).

11. Balai d'essuie-glace selon l'une des revendications 1 à 10,
**caractérisé en ce que**
la longueur des rails élastiques (28, 30) est supérieure à la longueur de la lame d'essuyage (14 ou 100).

12. Balai d'essuie-glace selon l'une des revendications 1 à 11,
**caractérisé par**
une traverse (36, 38) prévue au moins au niveau de chaque segment d'extrémité des deux rails élastiques correspondants (28, 30).

13. Balai d'essuie-glace selon l'une des revendications 1 à 12,
**caractérisé en ce qu'**
une traverse prévue dans la zone médiane des deux rails élastiques (28, 30) correspondants, est réalisée sous la forme d'une pièce (16) d'un dispositif de raccordement (16) pour relier la raclette d'essuyage (10) au bras d'essuie-glace (18).

14. Balai d'essuie-glace selon la revendication 12 ou 13,
**caractérisé en ce qu'**
au moins l'une des deux traverses (36, 38) prévue au niveau d'un segment d'extrémité des rails élastiques (28, 30) comporte une butée (74) reliée à son segment médian et couvrant partiellement la face frontale voisine de la lame d'essuyage (14 ou 100).

15. Balai d'essuie-glace selon l'une des revendications 1 à 8,
**caractérisé en ce que**
l'épaisseur (46 ou 112) d'une nervure (52 ou 102) existant entre les deux rainures longitudinales (54, 56 ou 106) dans la lame d'essuyage (14 ou 100) est inférieure à la distance (34) entre les arêtes longitudinales voisines (32) des deux rails élastiques correspondants (28, 30).
